(19) Europäisches Patentamt
European Patent Office
Office européen des brevets

(11) **EP 2 364 881 B1**

(12) **EUROPEAN PATENT SPECIFICATION**

(45) Date of publication and mention
of the grant of the patent:
**13.05.2015 Bulletin 2015/20**

(51) Int Cl.:
**B60R 13/08** (2006.01)　　　**B32B 5/02** (2006.01)
**B32B 7/00** (2006.01)　　　**G10K 11/168** (2006.01)

(21) Application number: **10155905.2**

(22) Date of filing: **09.03.2010**

(54) **Automotive trim part for sound insulation and absorption**

Automobilverkleidungsteil zur Schallisolierung und -absorbtion

Pièce de garniture d'automobile pour l'isolation sonore et l'absorption

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**14.09.2011 Bulletin 2011/37**

(60) Divisional application:
**13163972.6**

(73) Proprietor: **Autoneum Management AG**
**8406 Winterthur (CH)**

(72) Inventors:
- **Bertolini, Claudio**
 **I-20099 Sesto San Giovanni (IT)**
- **Castagnetti, Claudio**
 **8143 Stallikon (CH)**

(74) Representative: **van Adrichem Geisseler, Johanna et al**
**Autoneum Management AG**
**IP Department**
**Schlosstalstrasse 43**
**8404 Winterthur (CH)**

(56) References cited:
**EP-A1- 0 079 253**

- **ANONYMOUS: "Iterative determination of the material stiffness and Poisson's ratio from the measuremt of a 2-shape factor flat sample", SYMPOSIUM ON ACOUSTICS OF PORO-ELASTIC MATERIALS (SAPEM),, 1 December 2008 (2008-12-01), page 1, XP007921576,**
- **DAUCHEZ N ET AL: "On measurement of mechanical properties of sound absorbing materials", 2ND BIOT CONFERENCE ON POROMECHANICS,, 26 April 2002 (2002-04-26), pages 1/4-4/4, XP007921577,**
- **BERNARD CASTAGNEDE ET AL: "Effects of compression on the sound absorption of porous materials", APPLIED ACOUSTICS, ELSEVIER PUBLISHING, GB, vol. 61, 1 January 2000 (2000-01-01), pages 173-182, XP007921578, ISSN: 0003-682X**
- **LANGLOIS CHRISTIAN ET AL: "Polynomial relations for quasi-static mechanical characterization of isotropic poroelastic materials", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 110, no. 6, 1 December 2001 (2001-12-01), pages 3032-3040, XP012002633, ISSN: 0001-4966, DOI: 10.1121/1.1419091**

EP 2 364 881 B1

## Description

## Technical Field

The invention relates to an automotive trim part for noise attenuation in a vehicle.

## Background Art

The sources of noise in a vehicle are many and include, among others, power train, driveline, tire contact patch (excited by the road surface), brakes, and wind. The noise generated by all these sources inside the vehicle's cabin covers a rather large frequency range that, for normal diesel and petrol vehicles, can go up to 6.3kHz (above this frequency, the acoustical power radiated by the noise sources in a vehicle is generally negligible). Vehicle noise is generally divided into low, middle and high frequency noise. Typically, low frequency noise can be considered to cover the frequency range between 50Hz and 500Hz and is dominated by "structure-borne" noise: vibration is transmitted to the panels surrounding the passengers' cabin via a variety of structural paths and such panels then radiate noise into the cabin itself. On the other hand, typically high-frequency noise can be considered to cover the frequency range above 2kHz. High-frequency noise is typically dominated by "airborne" noise: in this case the transmission of vibration to the panels surrounding the passengers' cabin takes place through airborne paths. It is recognised that a grey area exists, where the two effects are combined and none of the two dominates. However, for passenger comfort, it is important that the noise is attenuated in the middle frequency range as well as in the low and high frequency ranges.

For noise attenuation in vehicles like cars and trucks the use of insulators, dampers and absorbers to reflect and dissipate sound and thus reduce the overall interior sound level are well known.

Insulation is normally obtained by means of a classical spring-mass barrier system, whereby the mass is formed by a high density impervious material also known as heavy layer and the spring is formed by a low density material like non compressed felt or foam. The stiffness of the spring is comparable to the sum of the compressibility of the air in the decoupling layer and the stiffness of its skeleton. The thickness of the noise insulation barriers used is normally predetermined strictly by the vehicle manufacturer. If this is the case, and in particular where the insulating layer has a substantially uniform thickness, changes in the resonance frequency can be carried out by increasing the mass. It is known that the resonance frequency of noise insulation systems should not be in the same range of the disturbing motor frequencies.

Both the absorbing and insulating systems on their own have only a small bandwidth of frequencies where they work optimal. The absorber works well more in the high frequencies, the insulator more in the low frequencies. Furthermore, both systems are sub optimal for use in a modern vehicle. The function of the insulator is strongly dependent on area weight and density, the higher the weight the better the insulator. The absorber on the other hand is strongly dependent on the thickness of the material, the thicker the better. Both thickness and weight are becoming increasingly restricted. The space in a car where the trims are placed is restricted. The thinner the material the more spacious the vehicle becomes, this is a selling argument for a car. The weight has a direct impact on the amount of fuel used during driving. Therefore, less weight is an economically and ecologically better option.

Recently a trend towards lower weights for the mass layer or heavy layer for classical spring-mass systems has decreased the average weight from about 3 $(kg/m^2)$ to around 2 $(kg/m^2)$. This drop in area weight also means less material used with common technology and therefore less cost. Even lower weights down to 1 $(kg/m^2)$ are possible and present on the market, but the technology to achieve this is expensive and has drawbacks in particular for low volume mass production. Typical classical mass layers are made of highly filled dense materials, like EPDM, EVA, PU, PP etc. Since these materials have a high density, normally above 1000 $(kg/m^3)$, it is necessary to make a very thin layer to obtain the low area weight. This increases production costs and causes problems in the processes involved, for instance the material tears easily during moulding.

The insulation performance of an acoustical barrier is assessed by sound transmission loss (TL). The ability of an acoustical barrier to reduce the intensity of the noise being transmitted depends on the type and structure of the materials composing the barrier. The most important physical property controlling sound TL of an acoustical barrier is the mass per unit area of its component layers. For best insulating performance, the heavy layer of a spring-mass should have a smooth and high-density surface to maximise reflection of noise waves, a non-porous structure and a certain material stiffness to minimize vibration. From this viewpoint, it is known that many textile fabrics, either thin and/or porous in structure, are not ideal for noise insulation.

JP 2001310672 discloses a multi layer structure consisting of two absorbing layers with a sound reflecting film layer in between. The film layer should reflect sound penetrating the absorbing layer back to the same absorbing layer, increasing the absorbing effect of the absorbing layers. The system can be tuned by optimising the film thickness and the density of the film.

JP 2001347899 discloses a classic spring-mass system with an additional absorbing layer on top of the mass layer. Mainly to absorb noise that leaked through holes in the part and is reflected back by the car interior. Because of this additional noise attenuation, the thickness and/or the density of the mass layer can be reduced.

EP 1428656 discloses a multi layer structure consisting of a foam layer and a fibrous layer with a film in between both layers. (See figure 3, Sample C is an example of a multi layer material comparable with the one disclosed in this patent.) The fibrous layer functions as an absorbing layer with an AFR of between 500 and 2500 (Nsm$^{-3}$) and an area mass of between 200 and 1600 g/m$^2$. This layer consists of compressed felt. The foam layer disclosed has a very low compression force deflection with stiffness between 100 and 100000 (Pa) comparable with the stiffness of a felt layer normally used as a decoupler. The film used is preferably perforated or so thin that it does not have an impact on the absorption of both absorbing layers together. The film is called acoustically transparent to indicate that the sound waves can pass the film. The thickness disclosed is in the range of 0.01 (mm) or less for this purpose.

EP 0 079 253 discloses a sound insulating trim part comprising at least one area with predominantly sound absorbing characteristics (4), whereby the absorbing area comprises at least one porous fibrous layer, and at least one other area (R) which has predominantly the characteristics of a resonator, and consisting of the same porous fibrous layer as the absorbing area (4).

Normally in a car a good balance of the insulation and absorption provided by the acoustic trim parts is required to reduce the sound pressure level in the passengers' compartment. The different parts can have different functions (for example, insulation on the dash inner, absorption on the carpets), but there is a trend to achieve a more refined subdivision of the acoustical functions on the single areas, to optimise the global acoustical performance. As an example, a dash inner can be split in two parts, one providing high absorption and another providing high insulation. Generally, the lower part of the dash is more suitable for insulation, because the noise coming from the engine and the front wheels through this lower area is more relevant, because the upper part of the dash is more suitable for absorption, while some insulation is already provided by other elements of the car, for instance the instrumentation panel. In addition, the backside of the instrumentation panel will reflect sound waves coming through the part of the upper dash hidden behind the instrumentation panel itself. These reflected sound waves could be effectively eliminated using absorbing material. Similar considerations can be applied to other acoustical parts of the car. For instance the flooring: insulation is predominantly of use in the food well areas and around the tunnel area, while absorbing areas are predominantly underneath the seat areas and the areas surrounding the food well and the tunnel areas as well as the side areas.

At the moment this trend is satisfied by the use of patches or locally applied additional material (US 20040150128). For instance US 5922265 discloses a method of applying additional heavy layer material in specified areas of a trim part where insulation is needed, while the areas without the heavy layer material will act as absorber. All these hybrid type products have the disadvantage, that they still increase the area weight to obtain a combined noise absorbing and insulating solution. They are labour, process and cost intensive. In addition, the material used as a decoupler for an acoustic spring-mass system is not optimal for use as an absorber. Furthermore the use of different types of materials makes recycling of the parts and discarded material more difficult.

Summary of invention

It is therefore object of the invention to obtain an sound insulating trim part, which works over the range of frequencies important for noise reduction in a vehicle, without the drawbacks of the state of the art, in particularly obtaining an alternative solution to the classical mass layers made of highly filled dense materials, like EPDM, EVA, PU, PP used today in acoustic mass-spring systems.

This object is achieved by the trim part according to claim 1. By a sound insulating trim part comprising at least one area with predominantly sound absorbing characteristics (absorbing area), whereby the absorbing area comprises at least one fibrous porous layer, and at least one other area with acoustic mass-spring characteristics (insulating area), whereby the insulating area consists of at least a mass layer and a decoupling layer, characterised in that the mass layer consists of the same porous fibrous layer as the absorbing area, in the insulating area compressed to have a dynamic Young's modulus (Pa) of at least (96·AW·t) with AW area weight (g/m$^2$), and t thickness (mm) of the fibrous layer, and at least an air impermeable thin barrier layer between the fibrous layer and the decoupling layer, and whereby the thickness of the fibrous layer in the absorbing area is larger than the thickness of the same layer in the insulating area.

Higher transmission loss is expected for a traditional spring-mass system with a mass layer or barrier layer, which is air impermeable. Unexpectedly, it was found that it is possible to create an acoustic mass layer for a spring-mass system consisting of a porous fibrous material and an air impervious barrier layer using the same fibrous layer as normally used for sound absorption. This enables the use of one porous fibrous layer for both insulation and absorption by adjusting the layer locally in those areas where predominantly insulation characteristics are of advantage. However to obtain a satisfying insulation, it is necessary that the dynamic Young's modulus of the porous fibrous material used as mass layer is at least: 96·AW·t (Pa) to obtain a radiation frequency of such porous fibrous material of at least 4900 (Hz), thus obtaining a good insulation performance over all the frequency range of interest, without a disturbing frequency dip in the sound TL spectrum.

The trim part according to the invention is based on the idea that both insulating and absorbing areas are needed to fine-tune the sound attenuation in a car. By using the same porous fibrous layer throughout the whole area of the trim part for both the insulating area and the absorbing area, it is possible to integrate both functions in a trim part, preferably in separate areas. The skilled person knows from experience which areas need what type of insulation, he is now able to supply parts using this knowledge and at the same time using less types of material and he is able to design the part according to the needs. A trim part according to the invention has at least one absorbing area and one insulating area, however the actual amount of areas per area and/or the sizes of the areas can differ depending on the part and the location the part is used and lost but not least dependent on the actual requirements.

An absorbing area is defined as an area of the trim part that behaves predominantly as absorber and shows bad insulation performance.

An insulating area is defined as an area on the trim part that behaves at least as a good insulator.

Porous fibrous layer

The use of porous fibrous materials, like felt or nonwoven, for the construction of acoustic absorbing parts is known. The thicker the fibrous layer is the better the acoustic absorption. The use of this type of material in a mass spring system to obtain a mass layer is not known in the art.

It was found that the dynamic Young's modulus is related to the radiation frequency of the porous fibrous layer $E = AW \cdot 4tv^2$ with E dynamic Young's modulus (Pa), v radiation frequency (Hz), AW Area Weight (kg/m²), and t thickness (m). According to this relation a proper value of the dynamic Young's modulus enables the design of a trim part with the radiation frequency outside the frequency range of interest and therefore an undisturbed insertion loss in the frequency range of interest. In particular, if the dynamic Young's modulus is higher than the minimum value defined as $E_{min} = AW \cdot 4 \cdot t \cdot v_0^2$, with $v_0 = 4900Hz$, then the radiation frequency of the fibrous layer will appear above the frequency range of application of the trim parts. Therefore the dynamic Young's modulus should be at least 96-AW-t (Pa) with AW (g/m²) and t (mm). This gives a high dynamic Young's modulus at which the material cannot be compressed easily anymore. The trim part containing a porous fibrous layer with at least a dynamic Young's modulus of $96 \cdot AW \cdot t$ (Pa) a decoupling layer and an impervious film layer between the porous fibrous layer and the decoupling layer, all 3 layers laminated to form one part, will function as an acoustic spring-mass system, ergo as an insulating area. The porous fibrous layer together with the film layer is an alternative mass layer and can replace the heavy layer material normally used. The material is cheaper and the overall part is easier to recycle in comparison to spring-mass systems using the classical filled heavy layer materials.

The porous fibrous layer can be any type of felt.

It can be made from any thermo formable fibrous materials, including those derived from natural and/or synthetic fibres. Preferably the felt is made from recycled material like shoddy cotton, or other recycled fibres, like polyester.

The fibrous felt material comprises preferably a binding material, either in binding fibres or in resinous material, for instance thermoplastic polymers. At least 30% Epoxy resin or at least 25% bi-component binder fibres is preferred. Other binding fibres or materials achieving the porous fibrous layer according to the invention are possible and not excluded.

Preferably the area weight is between 500 and 2000 (g/m²), more preferably between 800 and 1600 (g/m²).

An additional restriction is normally also the available space in the car where the acoustical trim part can be put. All layers of the trim part must share this space. The space available and normally restricted by the carmaker is around maximal 25-30 mm. Therefore the thickness of the porous fibrous layer in the insulating area is preferably between 1 and 10 (mm), leaving enough space for the decoupling layer. The thickness of the porous fibrous layer in the absorbing area is basically only restricted to the space available. The thickness can vary throughout the areas and between areas. However the thickness of the porous fibrous layer in the absorbing area is larger than in the insulating area.

The airflow resistance (AFR) of the porous fibrous layer in the absorbing area is preferably between 300 and 3000 (Nsm⁻³), preferably between 400 and 1500 (Nsm⁻³). A higher AFR is better for absorption. However it decreases with increasing thickness therefore the AFR is preferably between 400 and 1500 (Nsm⁻³) for a thickness of between 8 and 12 (mm). Adding additional absorbing layers can further enhance the absorption; either locally on the absorbing areas or as an additional layer on basically the whole trim part. In the insulating area this will effectively form a combined absorption and insulating area. The additional layers can be in the form of felt material similar or the same as used for the porous fibrous layer and/or additional scrim layers.

Next to the absorbing areas and the insulating areas also intermediate areas will exist, that form the areas between an insulating area and an absorbing area or around the rim of the part. These areas are less easy to identify as absorbing area or insulating area mainly due to process condition creating a type of intermediate zones with changing thickness, increasing in the direction of the absorbing zone and therefore behaving between a good absorber and a not so bad insulator.

Other type of intermediate areas can exist locally at highly 3D formed areas or at highly compressed areas around holes in the trim part, needed for throughput of cables or mounting fixtures, these areas are normally not dedicated to acoustic insulation as the nature of the holes destroys any insulating characteristic in their close vicinity.

Thin barrier layer

At least the insulating area(s) must contain a thin barrier layer. This thin barrier layer, situated between the porous fibrous layer and the decoupling layer, must be impervious to function as a sound barrier, however it does not have or need the mass to function as a mass layer, like the heavy layer barriers normally found in classic spring-mass systems. Only if the thin barrier layer is air impervious, the porous fibrous layer according to the invention together with the thin barrier layer, will function as a heavy layer for a classic spring-mass system. Although a film is given in the examples alternative non permeable thin materials can be used.

If a film is used as a barrier layer, it preferably has a thickness of at least 40 ($\mu$m), preferably around 60 to 80 ($\mu$m). Although thicker films will work, they will not really add to the function and only to the price of the part. Furthermore thicker films might interfere with the forming of the felt.

The thin barrier layer, in particular a film, can be made from thermoplastic material like PVOH, PET, EVA, PE, or PP or dual layer materials like a PE/PA foil laminate. The choice of the barrier material is dependent on the fibrous layer and on the decoupling layer and should be able to form a laminate binding all 3 layers together. Also materials that are used as an adhesive either as film or powder can be used. As a thin barrier layer also materials applied initially as a powder or in another form can be used as long as they form an impervious barrier layer after processing. The thickness should be adjusted to ensure a sound wave interaction. However, after the binding and/or forming the trim part, the film should be impervious to air in the final product.

The thin barrier layer should not necessarily also cover the porous fibrous layer in the absorbing areas and/or intermediate areas, however for ease of production it is recommended. The thin barrier layer as such will not interfere with the absorbing characteristics of the absorbing area, as the sound waves are coming from the side without the thin barrier layer.

Decoupling layer

As a decoupling layer, the standard material used for the spring layer in a classic acoustic spring-mass system can be used in at least the insulating area of the trim part according to the invention following the same principles. The layer may be formed from any type of thermoplastic and thermosetting foam, closed or open, e.g. polyurethane foam. It can also be made from fibrous material, e.g. thermo formable fibrous materials, including those derived from natural and/or synthetic fibres. The decoupling layer has preferably a very low compressional stiffness of less than 100 (kPa). Preferably the decoupling layer is also porous or open pored to enhance the spring effect. In principle the decoupling layer should be attached to the film layer over the entire surface of the part in the insulating areas to have the most optimised effect, however due to the production technique very locally this might not be the case. As the part should function overall as an acoustical spring-mass system, small local areas were the layers are not coupled will not impair the overall attenuation effect.

The thickness of the decoupling layer can be optimised, however is mostly depending on space restrictions in the car. Preferably the thickness can be varied over the area of the part to follow the available space in the car. Normally the thickness is between 1 and 100, in most areas between 5 and 20 (mm).

Additional layers

The trim part according to the invention comprises at least 3 layers in the insulating area and at least one layer - the porous fibrous layer - in the absorbing area, whereby the at least one layer of the absorbing area is a shared layer. To function optimal as a spring mass system the at least 3 layers of the insulating area are laminated together. However it is possible to optimise the part further by adding on the porous fibrous layer an additional layer with absorbing qualities, either locally on certain type of areas, partially or wholly on the trim part. The area weight of the additional layer is preferably between 500 and 2000 (g/m$^2$).

The absorbing layer may be formed from any type of thermoplastic and thermosetting foam, e.g. polyurethane foam. However for the purpose of absorbing noise the foam must be open pored and or porous to enable the entrance of sound waves according to the principles of sound absorption, as known in the art. The absorbing layer can also be made from fibrous material, e.g. thermo formable fibrous materials, including those derived from natural and/or synthetic fibres. It can be made of the same type of material as the fibrous porous mass layer but loftier. The airflow resistance (AFR) of the absorbing layer is preferably at least 500 (Nsm$^{-3}$), preferable between 500 and 2500 (Nsm$^{-3}$). Preferably the AFR differs from the AFR of the porous fibrous layer.

Also an additional scrim can be put on top of the absorbing material to enhance even further the acoustic absorbency and/or to protect the underlying layers, for instance against water etc. A scrim is a thin nonwoven with a thickness between 0.1 and around 1 (mm), preferably between 0.25 and 0.5 (mm) and an increased airflow resistance. It has preferably an airflow resistance (AFR) of between 500 and 3000 (Nsm$^{-3}$), more preferably of between 1000 and 1500 (Nsm$^{-3}$). Whereby the scrim and the underlying absorbing layer preferably differ in AFR, to obtain an increased absorption.

The area weight of the scrim layer can be between 50 and 250 (g/m$^2$), preferably between 80 and 150 (g/m$^2$).

The scrims can be made from continuous or staple fibres or fibre mixtures. The fibres can be made by meltblown or spunbond technologies. They can also be mixed with natural fibres. The scrims are for example made of polyester, or polyolefin fibres or a combination of fibres for instance of polyester and cellulose, or polyamide and polyethylene, or polypropylene and polyethylene.

These and other characteristics of the invention will be clear from the following description of preferential forms, given as non-restrictive examples with reference to the attached drawings.

Production method

The trim part according to the invention can be produced with cold and/or hot moulding methods commonly known in the art. For instance the porous fibrous layer with or without the film can be formed to obtain the wanted dynamic Young's modulus in the insulating area(s) and at the same time to form the part in the 3D shape needed, and in a second step the decoupling layer can be either injection moulded or a foam or fibre layer can be added to the backside of the film layer.

Definition of mechanical and compression stiffness and measurement

Mechanical stiffness is linked to the reaction that a material (a layer of material) offers to an external stress excitation. Compression stiffness is related to a compression excitation and bending stiffness is related to a bending excitation. The bending stiffness relates the applied bending moment to the resulting deflection. On the other hand, the compression or normal stiffness relates the applied normal force to the resulting strain. For a homogeneous plate made with an isotropic material, it is the product of the elastic modulus E of the material and the surface A of the plate.

For a plate made with an isotropic material both compression and bending stiffness relate directly to the material's Young's modulus and it is possible to calculate one from the other. However, if the material is not isotropic, as it is the case for most felts, the relationships just explained no longer apply, because bending stiffness is linked mainly to the in-plane material's Young's modulus, while compression stiffness is linked mainly to the out-of-plane Young's modulus. Therefore, it is not possible any more to calculate one from the other. In addition, both compression stiffness and bending stiffness can be measured in static or dynamic conditions and are in principle different in static and dynamic conditions.

The noise radiation from a layer of material is originated from the vibrations of the layer orthogonal to its plane and is mainly linked to the dynamic compression stiffness of the material. The dynamic Young's modulus of a porous material was measured with the commercially available "Elwis-S" device (Rieter Automotive AG), in which the sample is excited by a compression stress. The measurement using Elwis-S is described in for instance BERTOLINI, et al. Transfer function based method to identify frequency dependent Young's modulus, Poisson's ratio and damping loss factor of poroelastic materials. Symposium on acoustics of poro-elastlc materials (SAPEM), Bradford, Dec. 2008.

As these types of measurements are not generally used yet for porous materials, there exist no official NEN or ISO norm. However other similar measurement systems are known and used, based on similar physical principles, as described in detail in: LANGLOIS, et al. Polynomial relations for quasi-static mechanical characterization of isotropic poroelastic materials. J. Acoustical Soc. Am. 2001, vol.10, no.6, p.3032-3040.

A direct correlation of a Young's modulus measured with a static method and a Young's modulus measured with a dynamic method, because the dynamic Young's modulus is measured in a frequency range (for example: 300-600 (Hz), whose limit to 0 (Hz) (i.e., the static case) is not straightforward and in most of the cases meaningless.

For the current invention the compression stiffness is important and not the mechanical stiffness normally used in the state of the art.

Other measurements

Airflow resistance was measured according to IS09053.

The area weight and thickness were measured using standard methods known in the art.

The transmission loss *(TL)* of a structure is a measure of its sound insulation. It is defined as the ratio, expressed in decibels, of the acoustic power incident on the structure and the acoustic power transmitted by the structure to the receiving side. In the case of an automotive structure equipped with an acoustical part, transmission loss is not only due to the presence of the part, but also to the steel structure on which the part is mounted. Since it is important to evaluate the sound insulation capabilities of an automotive acoustical part independently from the steel structure on which it is mounted, the insertion loss is introduced. The insertion loss *(IL)* of an acoustical part mounted on a structure is defined as the difference between the transmission loss of the structure equipped with the acoustical part and the transmission loss of the structure alone:

$$IL_{part} = TL_{part+steel} - TL_{steel} \quad (dB)$$

The insertion loss and the absorption coefficient were simulated using SISAB, a numerical simulation software for the calculation of the acoustical performance of acoustical parts, based on the transfer matrix method. The transfer matrix method is a method for simulating sound propagation in layered media and is described in for instance BROUARD B., et al. A general method for modelling sound propagation in layered media. Journal of Sound and Vibration 1995, vo1.193, no.1, p.129-142.

## Brief description of drawings

Figure 1 Insertion loss of samples A-D

Figure 2 Example of an inner dash trim part with regions of sound insulation and regions of sound absorption.

Figure 3 Schematic of the multilayer for either the insulating area or the absorbing area according to the invention

Figure 4 Schematic of an alternative multilayer for either the insulating area or the absorbing area according to the invention

Figure 5 Insertion loss of multilayer according to figure 3 or 4

Figure 6 Absorption of multilayer according to figure 3 or 4

Figure 7 Schematic of an alternative multilayer for either the insulating area or the absorbing area according to the invention

Figure 8 Insertion loss of multilayer according to figure 7

Figure 9 Absorption of multilayer according to figure 7

Figure 10 Graph of the dynamic E modulus in relation to the area weight and the thickness of the porous fibrous layer.

Figure 11 Graph comparison of the insertion loss of different samples.

Figure

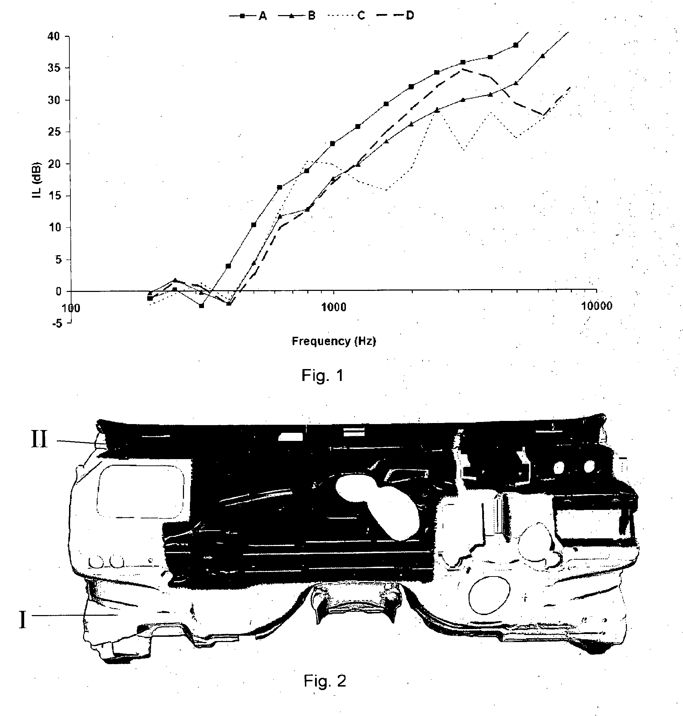

Figure 1 shows the insertion loss curves of the comparative sample A-C and sample D. The simulated insertion loss shown is the transmission loss of the multilayer as defined minus the transmission loss of the steel plate on which it is applied.

The transmission loss and the sound absorption of different noise attenuating multilayers of the state of the art were simulated using parameters based on measurements and compared with a noise attenuation multilayer according to the invention. All samples have the same total thickness of 25 (mm).

Comparative samples A and B are classic mass-spring systems with the mass layer formed from an EPDM heavy layer material of respectively 2 and 1 $(kg/m^2)$ and injected foam as the decoupling layer. The total area weight of the A was 3370 $(g/m^2)$ and of B was 2370 $(g/m^2)$.

Comparative sample C is made according to the principles of EP 1428656 which discloses a multilayer structure consisting of a foam layer and a fibrous layer with a film in between both layers. The top layer is an airlaid soft felt layer with an area weight of 1000 $(g/m^2)$, a thickness of 6 (mm) and an AFR of 1000 $(Nsm^{-3})$. The

total area weight of this multilayer is 2150 $(g/m^2)$. The dynamic Young's modulus was measured and is around 70000 (Pa). According to the equation given, this material will have a radiation frequency in the area of around 1700 (Hz). The film used is 0.06 (mm) and impervious the decoupling layer is injected foam with an area weight of 1100 $(g/_m{}^2)$.

Sample D was made according to the invention, and contains the same decoupling layer and film layer as comparative sample C. The porous fibrous layer on top of the film layer was made of a compressed rigid felt layer with an area weight of 900 $(g/m^2)$, a thickness of 6 (mm) and a dynamic Young's modulus of 550000 (Pa). According to the equation given, this material will have a radiation frequency in the area of around 7100 (Hz).

Sample A and B are classical spring-mass systems with an area weight for the heavy layer of respectively 2 $(kg/m^2)$ and 1 $(kg/m^2)$. The insulating performance is high over a large range of frequencies and therefore the preferred system to use for noise attenuation in a car, however the system is much too heavy. Furthermore, the material normally used for heavy layer, in this case EPDM, is difficult to recycle. In terms of weight, the sound absorbing system - C - is lighter and therefore preferred. In terms of overall noise attenuation, the classical spring-mass systems - A and B - are still superior. In comparative sample C the material of the first layer felt starts radiating, thus producing sound waves and therefore noise again. This is visible in the IL curve by a dip at around 1600 (Hz), the radiation frequency of the material used.

It was now found that by increasing the dynamic stiffness of the upper layer, in particularly by increasing the compression stiffness in the out-of-plane direction of the layer, the radiation frequency of the material could be shifted to a higher frequency.

By choosing a porous fibrous top material with an area mass, according to the mass law for insulation, and with a dynamic Young's modulus, at which the radiation frequency of the material is outside of the frequency range to be attenuated, the material will behave as a mass-spring system over the wanted frequency range.

Sample D for instance has a porous fibrous layer on top of the film layer made of a compressed rigid felt layer with an area weight of 900 $(g/m^2)$, a thickness of 3 (mm) and a dynamic Young's modulus of 550000 (Pa). It shows an insulation loss comparable and even better than the classic spring-mass system with 1 kg heavy layer. And the radiation frequency only appears as a dip at around 6300 (Hz). This is far above the frequency range normally expected as noise in a vehicle.

Figure 2 shows an example of an inner dash part with two areas of acoustic attenuation. Generally, the lower part of an inner dash part is more suitable for insulation (I), because the noise path coming from the engine and the front wheels through this lower area is more relevant, while the upper part of the dash (II) is more suitable for absorption, because some insulation is already provided by other elements of the car, for example the instrumentation panel. Between these areas, in areas where the packaging space is minimal or in heavily 3D-shaped areas, it is normally not possible to identify the actual acoustical characteristics for instance due to either impairing of the decoupling layer or compression of a lofty layer that should function as an absorbing area. Inner dashes with defined regions/areas of sound attenuation characteristics needed, as shown here, are normally made as two parts instead of one. Another option is to put additional heavy-layer pads on top of an absorbing material, generally foam, to obtain a local spring-mass system.

To achieve an overall better sound attenuation for an inner dash trim part the whole part can be built with different distinctive areas: the insulating area (I) can be formed with the alternative mass layer according to the invention, and the absorbing area (II) can be formed by the same porous fibrous layer not adjusted for insulation, ergo not rigidified. Thus area I of the trim part in the inner dash shown would contain the alternative mass-spring system according to the invention. Area II would contain the non-rigidified porous fibrous layer functioning as a standard absorber known in the art.

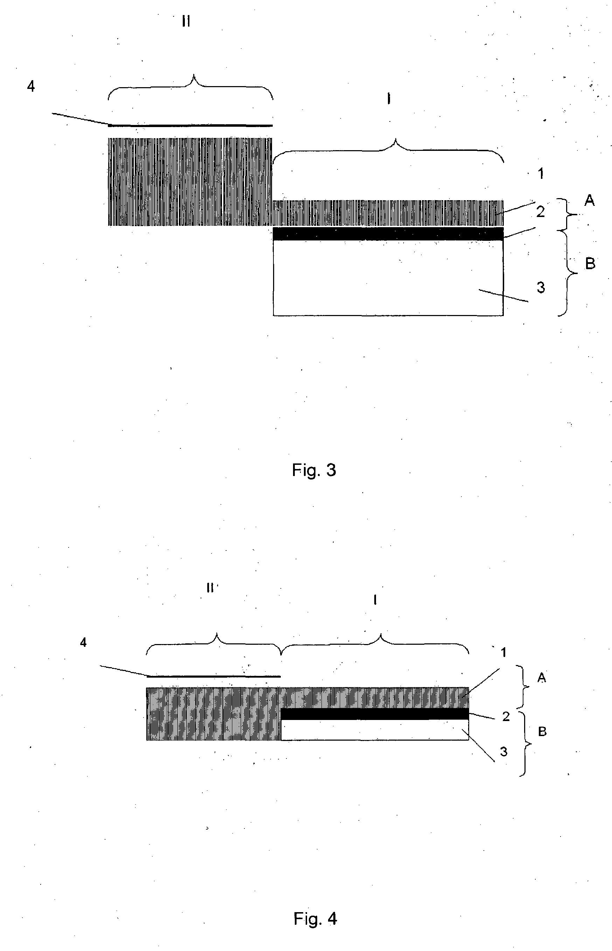

Figure 3 shows a schematic cross section of a multilayer according to the invention. The multilayer according to the invention contains at least an area with sound insulating characteristics (I), afterwards called insulating area, and an area with sound absorbing characteristics (II), afterwards called absorbing area. The location of the areas on the part is depending on the area of the vehicle where the part is used and the expected noise level and frequencies in that specific area. (See as an example the inner dash previous described.)

The insulating area (I) and the absorbing area (II) have at least the same porous fibrous layer (1), whereby this layer in the insulating area is compressed to form a rigid layer (1), such that the dynamic Young's modulus of this porous fibrous layer is at least 96-AW-t (Pa), with AW area weight (g/m²), and t thickness (mm) of the fibrous layer.

The insulation characteristic is formed with a mass layer A consisting of thin barrier layer 2 and the porous fibrous layer 1, according to the invention, and with a spring layer B consisting of a decoupling layer (3), together forming an acoustic spring-mass system. In Area I predominantly a sound-insulating characteristic can be expected accordingly.

In area II the porous fibrous layer 1 is not compressed but kept lofty enabling sound absorbing characteristics to this area. Preferably an additional scrim layer 4 can be put on top of the absorbing layer 4 to enhance the sound absorbing effect even further.

Figure 4 shows an alternative multilayer according to the invention, based on the same principles as in Figure 3 (see there for reference.) The difference is that the area underneath the compaction is used for the addition of the thin barrier layer and the decoupling layer, producing a more even part. In praxis the part will be more a crossover between figure 3 and 4, in particularly the shape of automotive trim parts is normally a 3D form and this will influence the final layout of the layering as well. Also between the insulating area and the absorbing area there will not be clear-cut boundaries, rather intermediate areas.

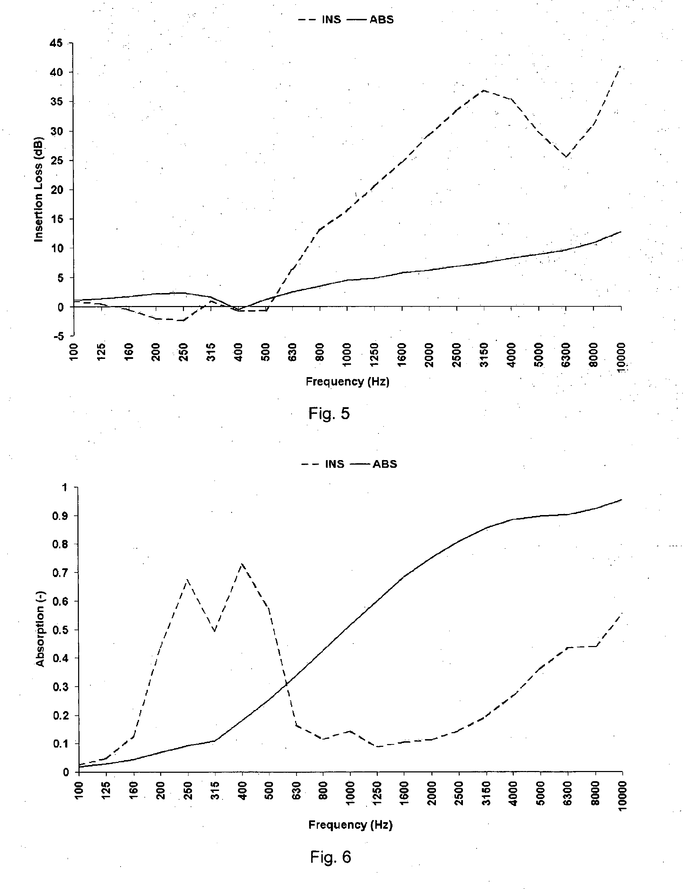

The insertion loss and absorption curves were simulated for multilayers according to figure 3 or 4, without the scrim layer, and they are shown, in figure 5 and figure 6 with following features for the different layers.

The absorbing area (II) consists of a porous fibrous layer in the form of a cotton based felt with 30% Epoxy binder, with a thickness of 20 mm and an area weight of 1100 (g/m²). The absorption and insulation simulated is indicated with ABS for the absorbing area.

The insulation area contains the same porous fibrous layer compacted to 2.7 (mm), to fall into the dynamic Young's modulus according to the invention, a film layer and a foam decoupling layer. The total thickness of the insulation layer is 20 mm. The simulated absorption and insulation is indicated with INS for the insulation area.

From the insertion loss (figure 5), it is clear that the resonance dip only appears around 6300 (Hz) and therefore falls in the scope of the claim. Also an increase in overall insertion loss can be observed showing the improvement in insulation characteristics for a part with such an insulation area. For the absorbing area there is no material to act as a spring and in this case the insertion loss curve shows values that are close to zero over all the frequency range.

From the absorption curve (figure 6), it is clear that the absorption of the insulation area is poor, and the absorption of the absorbing area is much better as expected. From an absorbing point of view a pure absorber like simulated here for the absorbing area will work best.

Having a trim part sharing both insulating areas and absorbing areas would however improve the overall sound attenuating performance of the part, in particularly because the dedication of an area to a certain type of sound attenuation (insulation or absorption) on one and the same trim part can be defined in advance and can be formed in a part locally without the need of additional patches or other materials. This means also that large trim parts like carpets or inner dash insulators now can be made in one piece even if different sound characteristics are required on different part areas.

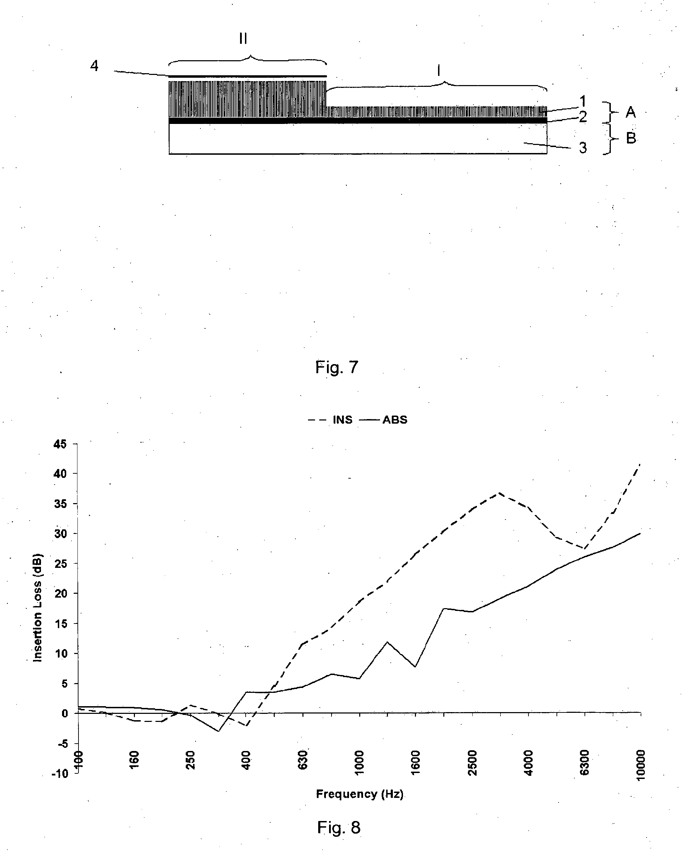

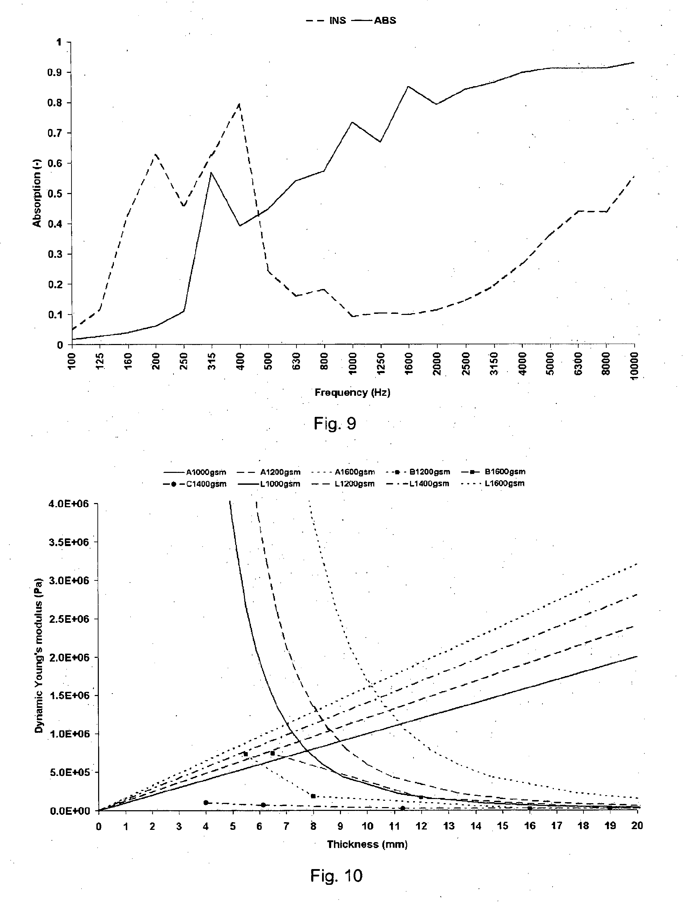

Figure 7 shows an alternative layering according to the invention where the film and decoupler is available over the whole surface of the part including the absorbing area(s). However this changes the behaviour in particular the insulation properties as can be seen from figure 8 and figure 9. In this example a multilayer with a total thickness of 25 mm, consisting of a cotton felt with 30% Epoxy resin as a binder for the porous fibrous layer with 2.7 (mm) and an area weight of 1100 (g/m²) in the insulation area and 17.3 (mm) in the absorbing area, a impervious film and a foam decoupler to obtain a total of 25 (mm) for both areas was simulated. The absorbing area will now start working as a spring-mass system, however its insertion loss curve will show an insulation dip around 1000 and 1600 (Hz), disturbing the noise attenuation in the wanted range of frequencies. Whereas the dip for the insulating area is around 6300 comparable with our previous sample. For the same samples however the absorption curve found for the absorbing area is slightly impaired due to the own resonance frequency. Although this solution might have some acoustical disadvantages in comparison with the previous layout it would still have advantage in comparison with the current state of the art. The use of the foam layer over the whole area of the trim part would help to form a more smoother part in comparison with only locally applied foam, in particularly if the foam is injected in a mould.

Other alternative solutions might be to have the thin barrier layer only partly in the insulating areas, but the decoupler over the whole surface so that in the areas without thin barrier layer the decoupler would function together with the fibrous layer as a double layer absorber.

To enhance the overall function of either the insulating area and/or the absorbing area additional absorbing material can be put on top of the fibrous layer at the opposite site from the decoupling layer. Also the use of a nonwoven (4) will enhance the absorbing characteristics of the trim part.

The effect, that a thin barrier layer together with a porous fibres top layer with a dynamic Young's modulus of at least 96-AW-t (Pa) can form a mass layer with characteristics comparable with a classical acoustic spring-mass system is not only dependent on the compression of the felt. It can also be dependent on the type of material used and the amount of binding between the material components, for instance between the fibres or the resin and fibres. The equation gives therefore only guidance to how to design a trim part according to the invention. The actual frequency where the radiation frequency in reality occurs can deviate from the calculated one, however as long as it appears above at least 4900 (Hz) it will not interfere any more with the noise attenuation necessary and mostly wanted in vehicles. For other applications the minimal dynamic Young's modulus needed might differ, however a skilled person will be able to adjust the equation following the invention guidance.

All optimisations of sound attenuation of trim parts, as given in the state of the art, are directed to defining the airflow resistance of at least the upper layer or the absorbing layers. It was found that for the trim part according to the invention, the radiation or resonance frequency of the upper felt layer does not depend strongly on its airflow resistance. The airflow resistance was found to have mainly a damping influence on the slope of transmission loss over the whole frequency measured. The damping effect is larger with increased airflow resistance.

In the following, an example of how a skilled person can use the equation to design a trim part according to the invention is given. Figure 10 shows a graph of dynamic Young's modulus vs. thickness for the insulating mass layer according to the invention. In this case a felt layer made primarily of recycled cotton with 30% phenolic resin was taken. This material was used until not long ago as decoupler or absorbing layer, mainly in multilayer configurations. Nowadays the phenol binder is no longer applicable in interior parts for vehicles due to regulations on vapours in the car interior. The material however can still be used on car external parts, in the engine bay area or in trucks. It is here not chosen as a restrictive sample but more as an example to show how to design the material according to the invention.

The samples L1000gsm, L 1200gsm L1400gsm and L1600gsm show the dynamic Young's modulus at a constant area weight of either 1000, 1200, 1400 or 1600 (g/m$^2$) over the thickness of the porous fibrous layer according to $E = Aw.4tv^2$ with $v = 5000Hz$. Figure 5 shows these as straight lines. The dynamic Young's modulus of the porous fibrous layer with these area weights should be above the corresponding line to obtain a radiation frequency of at least 5000Hz.

A1000, A1200 and A1600 show the material behaviour, ergo the dynamic Young's modulus of a primarily cotton felt material with 30% phenolic resin. For certain points the dynamic Young's modulus was measured and the behaviour as depicted was extrapolated from these measurements. This material shows a quick increase in the dynamic Young's modulus already showing a radiation frequency above 5000 (Hz) at an area weight of 1000 (g/m$^2$) and a thickness of around 8 (mm). However due to space restrictions this thickness would not be preferred in the interior of a car for instance for an inner dash. Although in theory it would be possible to come to the right dynamic Young's modulus with much lower densities, the weight of the porous fibrous layer trim part would no longer be enough to guarantee that the part can function as a good insulating part.

Samples B1200gsm and B1600gsm show the dynamic Young's modulus of a primarily cotton felt material with 30% epoxy resin. For certain points the dynamic Young's modulus was measured and the behaviour as depicted was extrapolated from these measurements. If one compare these data with those for phenolic resin felt discussed before it is clearly visible that the binding material has an effect on the compressional stiffness of the material and hence on the dynamic Young's modulus at a certain area weight and thickness.

Sample C1400gsm shows the dynamic Young's modulus of a primarily cotton felt material bound with 15% bi-component binding fibres. For certain points the dynamic Young's modulus was measured and the behaviour as depicted was extrapolated from these measurements.

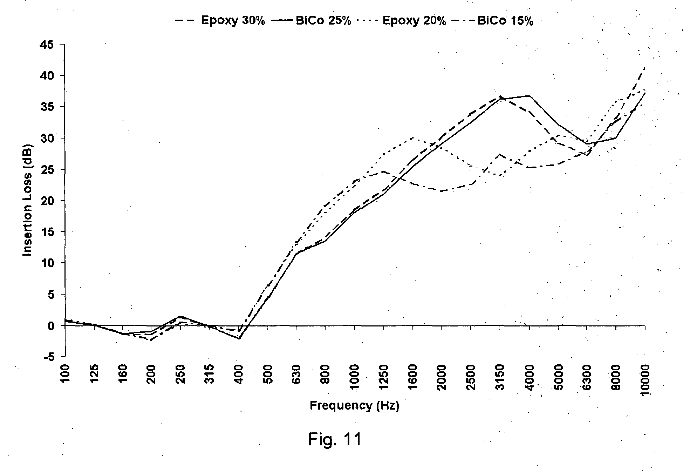

In a second set of samples the influence of the amount of binder material and the type of binder is looked at in more detail. Figure 11 shows the insertion loss and absorption curve of the following samples:

Sample EPOXY30% of cotton felt with 30% Epoxy with a measured area weight of 1090 (g/m$^2$), thickness of 2.7 (mm) was found having a measured dynamic Young's modulus of 5.55E5 (Pa) being higher than the required Young's modulus as calculated according to the invention.

Sample EPOXY20% of cotton felt with 20% Epoxy with a measured area weight of 1450 (g/m$^2$), thickness of 4 (mm) was found having a measured dynamic Young's modulus of 2.2E5 (Pa) being much lower than the required Young's modulus as calculated according to the invention.

Sample BICO25% of cotton felt with 25% bicomponent binding fibres with a measured area weight of 1040 (g/m$^2$), thickness of 2.1 (mm), was measured having a dynamic Young's modulus of 5.08E5 (Pa) being much higher than the required Young's modulus as calculated according to the invention.

Sample BIC015% of cotton felt with 15% bicomponent binding fibres with a measured area weight of 1280 (g/m$^2$), thickness of 4 (mm) was found having a dynamic Young's modulus of 9.91 E4 (Pa) being much lower than the required Young's modulus as calculated according to the invention.

For these samples in addition the insertion loss was simulated. Figure 6 shows the simulated insertion loss of the samples comparing 25 (mm) thick samples with top layer as defined, a 70 (pm) film and the remaining thickness covered with foam as the decoupler.

The measured and calculated frequencies for the samples own radiation are appearing as a dip in the IL curves. For the samples EPOXY25% and BIC015% the radiation frequency found was at 3150 and 1600 (Hz) both in the area of interest for the attenuation of sound in a car. While the radiation frequency of EPOXY30% and BICO25% were found both at around 6300 (Hz), outside the area of interest for the automotive industry.

As can also be seen from the materials depicted certain materials are not suitable to form the mass layer according to the invention, basically because they must be compressed to a thickness no longer possibly achievable or at a cost of extreme high pressure forces, rendering the process no longer cost effective. However by adjusting the ratio of binding material vs. fibrous material, the binding material used, and the area weight and or thickness it is possible to design materials suitable to be used as a porous fibrous mass layer according to the invention.

The sound insulating trim part either as an insulator or as a combined insulator and absorber, with acoustic mass-spring characteristics with a mass layer consisting of a porous fibrous layer with a dynamic Young's modulus E of at least 96·AW·t (Pa), and an air impermeable thin barrier layer, whereby the thin barrier layer is between the fibrous layer and the decoupling layer and all layers are laminated together, can be used in a car for instance as an inner dash as described previously. However it can also be used as a floor covering, eventually with a decorative layer or a carpet layer on top, whereby the carpet layer is preferably a porous system for instance a tufted carpet or a nonwoven carpet. It can also be used in outer or inner wheel liners. All applications can be in vehicles like a car or a truck.

Legend to the figures

I. Insulating area comprising

A Mass layer comprising at least fibrous porous layer and thin barrier layer
B Spring layer

II. Absorbing area

1. Fibrous porous layer
2. Thin barrier layer
3. Decoupling layer
4. Scrim layer

**Claims**

1. A sound insulating trim part comprising at least one absorbing area, which has predominantly sound absorbing characteristics, whereby the absorbing area comprises at least one porous fibrous layer, and at least an insulating area, which has acoustic mass-spring characteristics, whereby the insulating area consists of at least a mass layer and a decoupling layer, wherein the mass layer consists of the same porous fibrous layer as the absorbing area, wherein said porous fibrous layer in the insulating area is compressed to have a dynamic Young's modulus expressed in Pa of at least 96.AW.t with AW being the area weight expressed in g/m$^2$, and t being the thickness expressed in mm of the porous fibrous layer, and at least an air impermeable thin barrier layer between the porous fibrous layer and the decoupling layer, and whereby the thickness of the porous fibrous layer in the absorbing area is larger than the thickness of the same layer in the insulating area.

2. Sound insulating trim part according to claim 1, wherein the absorbing and or the insulating areas are more than 1 area and the thickness of the same type of areas is different among the separate areas.

3. Sound insulating trim part according to claim 1, wherein the AW of the porous fibrous layer is between 500 and 2000 g/m$^2$.

4. Sound insulating trim part according to one of the preceding claims, wherein the thickness t of the porous fibrous layer in the insulating area is between 1 and 10 mm.

5. Sound insulating trim part according to one of the preceding claims, wherein the thickness t of the porous fibrous layer in the absorbing area is at least 4, preferably between 4 and 25 mm.

6. Sound insulating trim part according to one of the preceding claims, further comprising at least partially an additional absorbing layer on top of the porous fibrous layer.

7. Sound insulating trim part according to one of the preceding claims further comprising at least partially an additional scrim on top of the porous fibrous layer.

8. Sound insulating trim part according to one of the preceding claims further comprising at least partially a decorative layer or a carpet layer, preferably a tufted carpet or a nonwoven carpet.

9. Use of the sound insulating trim part according to one of the preceding claims for an automotive part, like an inner dash, a floor covering or a wheel liner in a vehicle like a car or a truck.

**Patentansprüche**

1. Schallisolierendes Verkleidungsteil, umfassend wenigstens einen Absorptionsbereich, der vorwiegend schallabsorbierende Eigenschaften aufweist, wobei der Absorptionsbereich wenigstens eine poröse Faserschicht umfasst, und wenigstens einen Isolationsbereich, der akustische Masse-Feder-Eigenschaften aufweist, wobei der Isolationsbereich aus wenigstens einer Masseschicht und einer Entkopplungsschicht besteht, wobei die Masseschicht aus derselben porösen Faserschicht wie der Absorptionsbereich, wobei die poröse Faserschicht in dem Isolationsbereich komprimiert ist, um ein dynamisches Elastizitätsmodul, ausgedrückt in Pa, von wenigstens 96.AW.t., aufzuweisen, wobei AW das Flächengewicht, ausgedrückt in g/m$^2$, ist und t die Dicke der porösen Faserschicht, ausgedrückt in mm, ist, und wenigstens einer luftundurchlässigen dünnen Barriereschicht zwischen der porösen Faserschicht und der Entkopplungsschicht besteht, und wobei die Dicke der porösen Faserschicht in dem Absorptionsbereich größer als die Dicke derselben Schicht in dem Isolationsbereich ist.

2. Schallisolierendes Verkleidungsteil gemäß Anspruch 1, bei dem die Absorptions- und/oder die Isolationsbereiche mehr als 1 Bereich sind und die Dicke derselben Art von Bereichen zwischen den separaten Bereichen verschieden ist.

3. Schallisolierendes Verkleidungsteil gemäß Anspruch 1, bei dem der AW der porösen Faserschicht zwischen 500 und 2000 g/m$^2$ beträgt.

4. Schallisolierendes Verkleidungsteil gemäß einem der vorhergehenden Ansprüche, bei dem die Dicke t der porösen Faserschicht in dem Isolationsbereich zwischen 1 und 10 mm beträgt.

5. Schallisolierendes Verkleidungsteil gemäß einem der vorhergehenden Ansprüche, bei dem die Dicke t der porösen Faserschicht in dem Absorptionsbereich wenigstens 4, vorzugsweise zwischen 4 und 25 mm beträgt.

6. Schallisolierendes Verkleidungsteil gemäß einem der vorhergehenden Ansprüche, ferner umfassend wenigstens teilweise eine zusätzliche Absorptionsschicht oben auf der porösen Faserschicht.

7. Schallisolierendes Verkleidungsteil gemäß einem der vorhergehenden Ansprüche, ferner umfassend wenigstens teilweise ein zusätzliches Fasergelege oben auf der porösen Faserschicht.

8. Schallisolierendes Verkleidungsteil gemäß einem der vorhergehenden Ansprüche, ferner umfassend wenigstens teilweise eine Dekorationsschicht oder eine Teppichschicht, vorzugsweise einen Polteppich oder einen Vliesteppich.

9. Verwendung eines schallisolierenden Verkleidungsteils gemäß einem der vorhergehenden Ansprüche für ein Fahrzeugbau-Teil wie eine Innenarmatur, eine Bodenabdeckung oder eine Radhausschale in einem Fahrzeug, wie einem Personenwagen oder einem Lastwagen.

**Revendications**

1. Pièce de garniture d'isolation acoustique comprenant au moins une zone absorbante, qui a de manière prédominante des caractéristiques d'absorption acoustique, dans laquelle la zone d'absorption comprend au moins une couche fibreuse poreuse, et au moins une zone isolante, qui a des caractéristiques élastiques en masse acoustiques, dans laquelle la zone isolante est constituée au moins d'une couche massique et d'une couche de découplage, dans laquelle la couche massique est constituée de la même couche fibreuse poreuse que la zone absorbante, dans laquelle ladite couche fibreuse poreuse de la zone isolante est comprimée pour avoir un module de Young dynamique exprimé en Pa d'au moins 96.AW.t, où AW est le poids superficiel exprimé en g/m$^2$ et t est l'épaisseur exprimé en mm de la couche fibreuse poreuse, et au moins une mince couche barrière imperméable à l'air entre la couche fibreuse poreuse et la couche de découplage, et dans laquelle l'épaisseur de la couche fibreuse poreuse dans la zone absorbante est plus grande que l'épaisseur de la même couche dans la zone isolante.

2. Pièce de garniture d'isolation acoustique selon la revendication 1, dans laquelle les zones absorbante et/ou isolante constituent plus d'une zone et l'épaisseur du même type de zones est différente entre les zones séparées.

3. Pièce de garniture d'isolation acoustique selon la revendication 1, dans laquelle l'AW de la couche fibreuse poreuse se situe entre 500 et 2000 g/m$^2$.

4. Pièce de garniture d'isolation acoustique selon l'une quelconque des revendications précédentes, dans laquelle l'épaisseur t de la couche fibreuse poreuse dans la zone isolante se situe entre 1 et 10 mm.

5. Pièce de garniture d'isolation acoustique selon l'une quelconque des revendications précédentes, dans laquelle l'épaisseur t de la couche fibreuse poreuse dans la zone absorbante est d'au moins 4 mm, de préférence entre 4 et 25 mm.

6. Pièce de garniture d'isolation acoustique selon l'une quelconque des revendications précédentes, comprenant en outre au moins en partie une couche absorbante supplémentaire par-dessus la couche fibreuse poreuse.

7. Pièce de garniture d'isolation acoustique selon l'une quelconque des revendications précédentes, comprenant en outre au moins en partie une mousseline supplémentaire par-dessus la couche fibreuse poreuse.

8. Pièce de garniture d'isolation acoustique selon l'une quelconque des revendications précédentes, comprenant en outre au moins en partie une couche décorative ou une couche de tapis, de préférence un tapis tufté ou un tapis non tissé.

9. Utilisation de la pièce de garniture d'isolation acoustique selon l'une quelconque des revendications précédentes pour une pièce d'automobile, comme un tableau de bord intérieur, un recouvrement de plancher ou une garniture de roue dans un véhicule, tel qu'une voiture ou un camion.

Fig. 1

Fig. 2

Fig. 3

Fig. 4

Fig. 5

Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001310672 B
- JP 2001347899 B
- EP 1428656 A
- EP 0079253 A
- US 20040150128 A
- US 5922265 A

### Non-patent literature cited in the description

- **BERTOLINI et al.** Transfer function based method to identify frequency dependent Young's modulus, Poisson's ratio and damping loss factor of poroelastic materials. *Symposium on acoustics of poro-elastlc materials (SAPEM), Bradford,* December 2008
- **LANGLOIS et al.** Polynomial relations for quasi-static mechanical characterization of isotropic poroelastic materials. *J. Acoustical Soc. Am.,* 2001, vol. 10 (6), 3032-3040
- **BROUARD B. et al.** A general method for modelling sound propagation in layered media. *Journal of Sound and Vibration,* 1995, vol. 193 (1), 129-142